# EUROPÄISCHE PATENTSCHRIFT

(11) **EP 3 116 666 B1**
(45) Veröffentlichungstag und Bekanntmachung des Hinweises auf die Patenterteilung: **03.06.2020**
(21) Anmeldenummer: 15708163.9
(22) Anmeldetag: 27.02.2015
(51) Int. Cl.: B21B 35/14

(54) **SPIELFREIE WELLE-NABE-VERBINDUNG, ZAPFENAUFNEHMER UND ANTRIEBSORDNUNG MIT EINER DERARTIGEN SPIELFREIEN WELLE-NABE-VERBINDUNG**
PLAY-FREE SHAFT/HUB CONNECTION, PIN RECEIVER, AND DRIVE ARRANGEMENT COMPRISING SUCH A PLAY-FREE SHAFT/HUB CONNECTION
ASSEMBLAGE ARBRE-MOYEU SANS JEU, LOGEMENT DE TOURILLON ET ENSEMBLE D'ENTRAÎNEMENT COMPRENANT UN ASSEMBLAGE ARBRE-MOYEU SANS JEU DE CE TYPE

(30) Priorität: 12.03.2014 DE 102014204522
(43) Veröffentlichungstag der Anmeldung: 18.01.2017
(73) Patentinhaber: Voith Patent GmbH, 89522 Heidenheim (DE)
(72) Erfinder: GRAWENHOF, Peter, 89547 Dettingen (DE); MAIER, Dieter, 89537 Giengen (DE); STOCKER, Jürgen, 73466 Lauchheim (DE); WITTMANN, John Patrick, 91088 Bubenreuth (DE)
(74) Vertreter: Voith Patent GmbH - Patentabteilung
(86) Internationale Anmeldenummer: PCT/EP2015/054104
(87) Internationale Veröffentlichungsnummer: WO 2015/135766

(56) Entgegenhaltungen:
- DE-C1- 3 231 752
- FR-A1- 2 284 794
- US-A- 3 578 363
- US-A- 3 673 816
- US-A- 4 064 708

## Beschreibung

Die Erfindung betrifft eine spielfreie Welle-Nabe-Verbindung, im Einzelnen mit den Merkmalen aus dem Oberbegriff des Anspruchs 1. Die Erfindung betrifft ferner einen Zapfenaufnehmer für den Einsatz in einer spielfreien Welle-Nabe-Verbindung und eine Antriebsanordnung mit einer erfindungsgemäß ausgebildeten Welle-Nabe-Verbindung.

Drehfeste formschlüssige schnell lösende Verbindungen zwischen antreibenden und angetriebenen Bauteilen, insbesondere zwischen einem Wellenzapfen und einer Arbeitswalze und dem auf diesen aufgesetzten Treffer für den Einsatz in Walzwerken sind in einer Vielzahl von Ausführungen aus dem Stand der Technik bekannt. Unter einem Treffer wird dabei eine Verbindungseinheit zwischen einer Gelenkwelle und einem Wellenzapfen verstanden, wobei diesem weitere Funktionen zuordenbar sind. Stellvertretend wird hier beispielhaft auf Ausführungen aus den Druckschriften DE 950 782, DE 197 10 554 A1 und DE 197 10 552 A1 verwiesen. Bei diesen Ausführungen erfolgt die Übertragung eines Drehmomentes durch Formschluss zwischen Mitnahmeflächen am Wellenzapfen und dem jeweiligen Anschlusselement in Form eines Treffers. Die Arbeitswalze ist wenigstens mittelbar mit einer Antriebsmaschine über eine Gelenkwelle gekoppelt. Da in Walzwerken die Walzen regelmäßig nachgeschliffen werden müssen, ist zwischen der jeweiligen Arbeitswalze und der Gelenkwelle eine Anschlusstechnik erforderlich, die ein schnelles Verbinden und Lösen ermöglicht und ferner verschleißarm ist. Bei herkömmlichen derartigen Verbindungen sieht eine übliche Ausbildung nach dem Stand der Technik vor, die Nabe und einen zuordenbaren Wellenzapfen als Teil einer formschlüssigen Kupplung mit ineinandergreifenden Kupplungspassflächen sowie mit zusätzlich einlegbaren Verschleißplatten mit Passungsspiel auszubilden. Die Drehmomentübertragung erfolgt über den mit der Nabe formschlüssig verbundenen Flachzapfen. Das vorhandene Passungsspiel ist zwar für die Montage vorteilhaft, führt jedoch zu dynamischen Drehmomentüberhöhungen im Walzbetrieb und dadurch zu einem starken Verschleiß der Treffernabe und Verschleißplatten sowie hohen Belastungsspitzen am Antriebsaggregat, die auch die Qualität des Walzgutes stark beeinträchtigen können.

Die Druckschrift DE 197 10 554 A1 schlägt daher vor, zur Herstellung eines spielfreien Formschlusses zwischen den Passflächen in einem zwischen diesen ausgebildeten keilförmigen Aufnahmespalt federbelastete Keilplatten einzulegen, wobei die Keilfläche in Längsrichtung des Wellenzapfens und damit auch in Längsrichtung bzw. Richtung der Längsachse des Zapfenaufnehmers ausgebildet ist. Die federbelasteten Keilplatten werden dabei beim Einfahren der Walze axial und zugleich durch ihre Keilform radial verschoben und klemmen so den Wellenzapfen gegen seine Anlagefläche am Treffer. Dadurch kann die Drehmomentübertragung formschlüssig, jedoch spielfrei über den Flachzapfen erfolgen. Diese Ausführung setzt eine entsprechende Ausbildung der Verschleißplatten voraus, wobei die Spielfreiheit durch die entsprechende Auslegung der Verschleißplatten sowie die Positionierung in Axialrichtung zwischen dem Flachzapfen und Treffer eingestellt wird. Diese Ausführung ist jedoch relativ aufwendig und eine Nachstellung bei Verschleiß ist nicht oder nur sehr bedingt möglich.

Auch aus der US 2,219,137 ist eine Wellen-Naben Verbindung bekannt, bei der eine feste Verbindung durch einen in Achsrichtung angeordneten Keil hergestellt wird.

Aus der DE 24 44 104 A, die der FR2 284 794 entspricht, ist eine feste Verbindung einer Welle mit einer zu der Welle konzentrisch angeordnete Nabe bekannt. Koaxial zur Welle ist ein Ring mit einer in Längsrichtung der Welle angeordneten konisch verlaufenden Keilfläche vorgesehen. Dieser Ring weist einen Bund auf. Die Konusfläche dieses Ringes wirkt mit einer gegenläufig in axialer Richtung ausgerichteten koaxial zur Welle angeordneten zweiten Konusfläche eines bundlosen Ringes zusammen. Durch Verspannen dieser beiden Konusflächen kann eine feste Verbindung von Welle und Nabe hergestellt werden.
Aus der US 3,673,816 ist eine Wellen-Naben-Verbindung mit einem Wellenzapfen mit sich zwei gegenüberliegenden Flächen bekannt. Für die Herstellung einer festen Verbindung ist ein inneres Keilelement vorgesehen. Dieses innere Keilelement wirkt mit einem äußeren Keilelement zusammen. Die Erstreckung der beiden Keilelemente in radialer Richtung kann durch Verschieben der Keilelemente zueinander verändert werden. Dabei sind die Keilflächen in Richtung der Welle ausgerichtet und damit senkrecht zur Rotationsbewegung der Welle ausgereichtet. Durch ein vorgesehenes Federelement mit einer in axialer Richtung der Welle wirkenden Federkraft, ist eine Verschiebung des einen Elementes mit der Keilfläche in axialer Richtung der Welle aufgrund der wirkenden Federkraft möglich.

Aus der US 4,064,708 ist eine Wellen-Nabenverbindung bekannt, bei der wiederrum zwei in Achsrichtung der Welle ausgerichtete Keilplatten vorgesehen sind, die gegeneinander vorgespannt sind, um eine feste Verbindung von Welle und Nabe bereitzustellen. an den seitlichen Enden der Keilplatten sind Positionsschrauben vorgesehen, um die Lage der Keilplatten in Umfangrichtung zu sichern.

Weiterhin ist aus der DE 32 31 752 C2 eine Trefferverbindung bekannt. Die Trefferverbindung weist Mitnehmer auf, die in Ihrem inneren mit einer Feder versehen sind. Durch die Feder werden die Mitnehmer in eine spielfreie Position geschoben. Auch hier werden die Mitnehmer in Achsrichtung zur Einnahme einer spielfreien Position verschoben.

Aus der US 3,315,993 ist eine Wellen-Zapfen Verbindung bekannt, bei der ein Zapfen durch ein Keilelement fixiert wird. Die Keilfläche dieses Keilelementes ist senkrecht zur Rotationsachse der Wellen angeordnet. Zur Fixierung der Welle wird das Keilelement durch Schraubverbindungen senkrecht zur Rotationachse bewegt. Bei Verschleiß kann das Keilelement und eine vorgesehene Verschleißplatte ausgetauscht werden.

Aus der US 3,578,363 ist eine Wellen-Zapfen Verbindung bekannt, bei der der Zapfen durch einen Klemmmechanismus mit einem Keilelement arretiert wird. Das Keilelement ist senkrecht zur Rotationsachse angeordnet und wird für eine Arretierung des Zapfens durch Schrauben in eine Klemmstellung verschoben. Zum Lösen der Arretierung ist ein Federelement vorgesehen, durch das das Keilelement zur Verringerung des Kraftschlusses mit einer Rückstellkraft beaufschlagt ist. Werden die Arretierschrauben gelöst, so bewegt sich das Keilelement in eine Ausgangsstellung zurück.

Aus der DE 1 192 885 ist eine Keilverbindung zwischen einer Welle und einer Nabe mit einem tangential und radial beweglichen Keilpaar bekannt. Das Keilpaar wird mittels einer parallel zur Rotationsachse angeordneten Spannschraube in einer in der Nabe/ Welle angeordneten Nut verspannt. Zum Lösen der Keilverbindung nach dem Lockern oder Entfernen der Spannschraube sind Federn für das Lockern der Klemmkeile vorgesehen.

Der Erfindung lag daher die Aufgabe zugrunde, eine Verbindungstechnik für eine formschlüssige Welle-Nabe-Verbindung zu schaffen, die einerseits die Auslegung der Bauteile und Positionierung bei Montage mit dem erforderlichen Spiel erlaubt und ferner während der Betriebsdauer und während des Betriebs mit der aus Verschleiß resultierenden Spielvergrößerung immer wieder auf Anlage nachgestellt wird. Die Verbindungstechnik soll insbesondere den Anforderungen an den Einsatz in Walzwerken gerecht werden und ein einfaches und schnelles Verbinden und Lösen des Antriebsstranges erlauben. Des Weiteren soll der Prozess des Verbindens bzw. Lösens sehr robust und wenig störanfällig sein, sodass zusätzliche Stillstandszeiten der Anlage auf ein Minimum reduziert werden.

Die erfindungsgemäße Lösung wird durch die Merkmale der unabhängigen Ansprüche charakterisiert. Vorteilhafte Ausgestaltungen sind in den Unteransprüchen wiedergegeben.

Eine spielfreie Welle-Nabe-Verbindung, insbesondere Wellenzapfen-Trefferverbindung für den Einsatz in Walzwerken, wobei zumindest ein Teilbereich einer um eine in Längsrichtung verlaufende Rotationsachse rotierbaren Welle bzw. Walze mit einem Zapfenaufnehmer unter Ausbildung eines Verbindungsbereiches formschlüssig ineinandergreifend zueinander angeordnet sind und zwischen der Welle und dem Zapfenaufnehmer eine Nachstelleinrichtung zum Ausgleich von Spiel vorgesehen ist, ist derart ausgebildet, dass die Nachstelleinrichtung als Klemmvorrichtung ausgeführt ist und zumindest ein Ausgleichselement mit mindestens einer mit einem der Anschlusselemente - Zapfenaufnehmer und/oder Welle - zusammenwirkenden Keilfläche umfasst, wobei die Nachstelleinrichtung derart ausgebildet und ausgelegt ist, dass diese geeignet ist, eine automatische Nachstellung des mindestens einen Ausgleichselementes gegenüber einer der Anschlusskomponenten zu ermöglichen. Das heißt, dass bei Verschleiß die Ausgleichselemente nicht ausgetauscht werden müssen, sondern die Welle-Nabe-Verbindung ohne Betriebsunterbrechung weiter zur Drehmomentübertragung aufgrund der automatischen Nachstellung eingesetzt werden kann. Insbesondere ist es dadurch möglich einen während des Betriebs auftretenden Verschleiß automatisch zu kompensieren.

Bezüglich des konkreten konstruktiven Aufbaus der Stelleinrichtung besteht eine Mehrzahl von Möglichkeiten. Diese umfasst vorzugsweise zumindest eine Spanneinrichtung, welche derart ausgeführt und angeordnet ist, eine am einzelnen Ausgleichselement wenigstens mittelbar wirksame Stellkraft aufzubringen, die ein Verklemmen des Ausgleichselementes zwischen Welle und Zapfenaufnehmer bewirkt. Die Stellkraft ist vorzugsweise größer als die Haltekraft, die erforderlich ist, um das Ausgleichselement in einer vordefinierten Lage zu halten, so dass bei Verschleiß automatisch ein Nachführen des Ausgleichselementes zum Zusammenwirken mit den Anschlusskomponenten im Sinne eines maximalen Flächenkontaktes erfolgt. Die Spanneinrichtung kann dazu zumindest ein, einem Ausgleichselement zugeordnetes Spannelement umfassen, welches im Zapfenaufnehmer sich an diesem abstützend geführt oder gelagert ist und an einem Flächenbereich des Ausgleichselementes angreift. Als Spannelemente kommt vorzugsweise zumindest ein Element, ausgewählt aus der nachfolgenden Gruppe zum Einsatz:
- ein elastisches Element, insbesondere eine Federeinheit
- einem Kolbenelement, welches mit einer Kraft, erzeugt gemäß einer Möglichkeit oder einer Kombination aus der nachfolgend genannten Gruppe beaufschlagt wird:
- hydraulisch
- pneumatisch
- elektronisch
- mechanisch
- eine Spannschraube.

In einer vorteilhaften Ausführungsform ist vorgesehen, dass die Spanneinrichtung ein Spannelement umfasst, das gleichzeitig die mindestens zwei Ausgleichselemente für eine automatische Nachstellung mit einer Kraft beaufschlagt. Dadurch kann verhindert werden, dass die mindestens zwei Ausgleichselemente mit unterschiedlichen Kräften beaufschlagt werden, was zu einer unterschiedlichen Nachstellung und damit einer unterschiedlichen Klemmung führen würde.

Gemäß der Erfindung ist vorgesehen, die Keilfläche senkrecht zur Längsrichtung des Zapfenaufnehmers verlaufend auszurichten. Unter Ausrichtung der Keilfläche wird dabei insbesondere der Verlauf bzw. Neigungsrichtung der Keilfläche verstanden. Entscheidend ist, dass die Verlaufsrichtung der Keilfläche von der Verlaufsrichtung der Längsachse des Zapfenaufnehmers abweicht, vorzugsweise quer zu dieser ausgerichtet ist.

Gemäß dieser Ausführungsform verläuft die Keilfläche somit nicht in Längsrichtung des Zapfenaufnehmers sondern quer zu dieser bzw. zu einer Ebene, die durch die Längsachse des Zapfenaufnehmers und in einer Senkrechten zu dieser beschreibbar ist. Dadurch besteht die Möglichkeit, die an den Ausgleichselementen wirksame Stelleinrichtung von der Stirnseite des Zapfenaufnehmers in beliebige Bereiche in Längsrichtung des Zapfenaufnehmers in Umfangsrichtung um die Längsachse des Zapfenaufnehmers zu verlagern. Dadurch sind zum einen größere Flächenbereiche an den Ausgleichselementen realisierbar, die Stelleinrichtungen besser zugängig und die Ausgleichselemente hinsichtlich ihrer Wirkungsweise einfacher nachstellbar.

Gemäß der Erfindung umfasst die einzelne Nachstelleinrichtung zumindest zwei derartige Ausgleichselemente, die beidseitig der Ebene, gebildet von der Längsrichtung des Zapfenaufnehmers und einer Senkrechten zu dieser angeordnet sind. Bevorzugt erfolgt die Anordnung der Ausgleichelemente symmetrisch. Dies bedingt einen symmetrischen Aufbau auch des Zapfenaufnehmers, sodass Unwuchten vermieden werden.

In einer vorteilhaften Ausbildung ist die Welle im Verbindungsbereich mit dem Zapfenaufnehmer als Flachzapfen ausgeführt, umfassend zwei parallel zueinander angeordnete Flachseiten. Zwischen jeder Flachseite und dem Zapfenaufnehmer ist eine Nachstelleinrichtung vorgesehen, wobei bei Nachstelleinrichtungen mit mehreren Ausgleichselementen die mit den Anschlusskomponenten zusammenwirkenden Keilflächen der einer Flachseite zugeordneten Ausgleichselemente einander entgegengesetzt ausgerichtet sind.

Umfasst die einzelne Nachstelleinrichtung lediglich ein Ausgleichselement, ist die Verbindung durch zumindest zwei Ausgleichselemente charakterisiert, wobei jeweils eines der Ausgleichselemente zwischen einer Flachseite und dem Zapfenaufnehmer angeordnet ist. Bei Ausführungen der Nachstelleinrichtungen mit zwei oder mehreren Ausgleichselementen sind dann jeder Flachseite zumindest zwei oder mehrere Ausgleichselemente zugeordnet.

Besonders vorteilhaft erfolgt die Anordnung der Ausgleichselemente symmetrisch bezüglich zweier senkrecht zueinander ausgerichteter Ebenen, wobei jede der Ebenen durch die Längsachse des Zapfenaufnehmers und einer Senkrechten zu dieser charakterisiert ist.

Aus konstruktiven Gründen und um den Aufwand für die Integration der Stelleinrichtungen gering zu halten, erstreckt sich ein einzelnes Ausgleichselement vorzugsweise über einen Großteil des Verbindungsbereiches, vorzugsweise vollständig über diesen.
Denkbar sind jedoch auch eine Mehrzahl in Längsrichtung der Welle, insbesondere des Wellenzapfens und damit des Zapfenaufnehmers einander benachbart angeordneter derartiger Ausgleichselemente, wobei auch hier die beidseitige Anordnung, vorzugsweise eine symmetrische Anordnung, bevorzugt ist.

Gemäß einer besonders vorteilhaften Weiterentwicklung ist es vorgesehen, die Ausgleichselemente selbst als Verschleißplatten auszuführen, d. h. diese sind durch eine geringere Härte charakterisiert als die Anschlusskomponenten. Dies bietet den Vorteil, dass lediglich die Ausgleichselemente als die verschleißenden Elemente auszutauschen sind und auf einen Austausch der anderen Komponenten weitgehend verzichtet werden kann.

Die Ausführung der Keilflächen erfolgt zumindest an einer mit einer Anschlusskomponente zusammenwirkenden Seite der Ausgleichselemente, wobei diese Fläche mit einer entsprechend ausgebildeten Keilfläche an einem Anschlusselement, welches vom Zapfenaufnehmer oder dem Wellenzapfen gebildet werden kann, zusammenwirkt. In besonders vorteilhafter Ausbildung ist die Keilfläche an der zum Zapfenaufnehmer gerichteten Seite vorgesehen, um hier auf standardisierte Wellenzapfen, insbesondere in Form von Flachzapfen, zurückgreifen zu können.

In einer Weiterbildung ist vorgesehen, das einzelne Ausgleichselement mit einer Vorspannung gegenüber zumindest einem der Anschlusselemente - Zapfenaufnehmer und/oder Welle - und/oder gegenüber einem weiteren Ausgleichselement einzubauen. Die Vorspannkraft kann dabei entweder je nach Anordnung der Spanneinrichtung in besonders vorteilhafter Ausbildung zur automatischen Nachstellung während des Betriebes genutzt werden oder aber zum Lösen der Verbindung zwischen Welle und Nabe im Lösefall.

Die Nachstelleinrichtung umfasst dazu eine Stelleinrichtung, die mit wenigstens einem der Ausgleichselemente zusammenwirkt, wobei die Stelleinrichtung gemäß zumindest einer der nachfolgend genannten Möglichkeiten oder einer Kombination aus diesen ausgeführt sein kann:
- eine hydraulische Stelleinrichtung
- eine pneumatische Stelleinrichtung
- eine elektronische Stelleinrichtung
- eine mechanische Stelleinrichtung.
Die konkrete Ausführung richtet sich nach den örtlichen Gegebenheiten.

Das Lösen der Verbindung, d.h. Aufheben der Klemmverbindung kann durch Aufheben oder Vermindern der Stellkraft der Spanneinrichtung durch entsprechende Betätigung dieser oder über eine separate Löseeinrichtung erfolgen. Im erstgenannten Fall sind in der Spanneinrichtung die Funktion des Verspannens und des Lösens in Funktionskonzentration platzsparend integriert. Im zweiten Fall ist eine separate Einrichtung vorgesehen. Diese Löseeinrichtung ist geeignet, wenigstens mittelbar, d.h. direkt oder indirekt am einzelnen Ausgleichselement eine entgegen der Stellkraft der Spanneinrichtung wirksame Kraft aufzubringen. Die Löseeinrichtung bietet den Vorteil eines schnellen und für das Arbeitspersonal leichten und gefahrfreien Lösens der Verbindung unabhängig von der Stelleinrichtung. Das Vorsehen einer separaten Löseeinrichtung bietet den Vorteil, dass nach Deaktivierung dieser keine separate Einstellung der Stellkraft auf das einzelne Ausgleichselement erforderlich ist, sondern diese sofort wieder vorhanden ist. Ferner erlaubt die Ausführung mit Löseeinrichtung auch Ausführungen von Spanneinrichtungen, die zur aktiven Beeinflussung der Stellkraft geeignet sind.

Die Löseeinrichtung kann verschiedenartig ausgebildet sein. Diese umfasst jedoch zumindest eine mit Vorspannung auf das einzelne Ausgleichselement entgegen zur Stellkraft wirkende Einrichtung.

Die einzelne mit Vorspannung auf das einzelne Ausgleichselement entgegen zur Stellkraft wirkende Einrichtung umfasst im einfachsten Fall zumindest eine zwischen zwei in Querrichtung zu einer Ebene, gebildet von der Rotationsachse des Zapfenaufnehmers und einer Senkrechten, angeordneten Ausgleichselementen angeordnete Federeinheit. Eine alternative Ausführung sieht eine am Ausgleichselement oder an einem mit diesem zusammenwirkenden Kolben einer Spanneinrichtung wirksame hydraulische Stelleinrichtung vor.

In vorteilhafter Ausbildung sind Spanneinrichtung und die Löseeinrichtung in einer Baueinheit integriert. Die Integration bietet den Vorteil einer kompakten Bauweise und minimalen konstruktiven Aufwand.

Ein erfindungsgemäß ausgestalteter Zapfenaufnehmer ist in Anspruch 12 definiert.

Bei einer erfindungsgemäßen Antriebsanordnung für ein Walzwerk zum Antrieb zumindest einer Arbeitswalze, welche über eine Gelenkwelle mit einer Antriebsmaschine gekoppelt ist, wobei zwischen Gelenkwelle und Arbeitswalze eine Verbindungseinrichtung in Form eines Treffers vorgesehen ist, ist die spielfreie Verbindung zwischen dem Treffer und der Arbeitswalze als Welle-Nabe-Verbindung gemäß einem der Ansprüche 1 bis 11 ausgeführt. Diese Lösung bietet gerade in Walzwerksantrieben den Vorteil, die erforderlichen Wechselintervalle, die eine Betriebsunterbrechung bedingen, zu verlängern.

Die erfindungsgemäße Lösung wird nachfolgend anhand von Figuren erläutert. Darin ist im Einzelnen Folgendes dargestellt:
- Figur 1: verdeutlicht beispielhaft einen Antriebsstrang mit einer erfindungsgemäß ausgeführten spielfreien Welle-Nabe-Verbindung zwischen einem Zapfenaufnehmer und einem Wellenzapfen;
- Figuren 2a und 2b: zeigen beispielhaft die Einzelkomponenten Welle, insbesondere Wellenzapfen und Zapfenaufnehmer;
- Figur 3: verdeutlicht eine zweite vorteilhafte Ausführung einer Nachstelleinrichtung mit hydraulischer Löseeinrichtung und mechanischer Spanneinrichtung;
- Figur 4: verdeutlicht eine weitere vorteilhafte Ausführung einer Nachstelleinrichtung mit hydraulischer Löseeinrichtung und mechanischer Spanneinrichtung;
- Figur 5: zeigt beispielhaft eine Ausbildung eines Ausgleichselementes mit zwei Keilflächen.

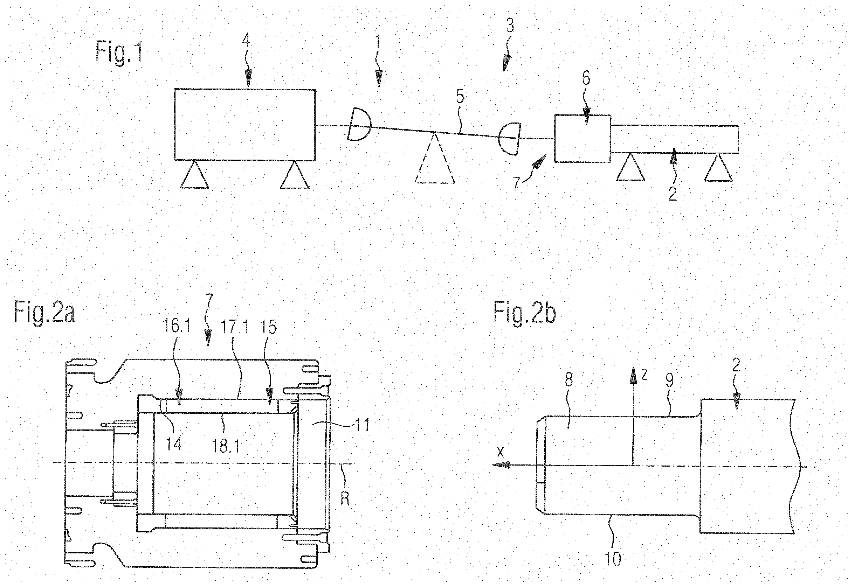

Die Figur 1 verdeutlicht in schematisiert vereinfachter Darstellung den Aufbau eines Antriebsstranges 1 zum Antrieb von zumindest einer Walze 2, welche in einer besonders vorteilhaften Anwendung in Walzwerken 3 als Arbeitswalze zum Einsatz gelangt. Eine Walze ist eine spezielle Ausführungsform einer Welle 2. Der Antriebsstrang 1 umfasst zumindest eine Antriebsmaschine 4, welche zum Ausgleich von Lageungenauigkeiten über eine Gelenkwelle 5 in Form einer sogenannten Schwergelenkwelle wenigstens mittelbar mit der Arbeitswalze verbunden ist. Die Verbindung erfolgt über eine Welle-Nabe-Verbindung 6, wobei die Nabe entweder vom Gelenkwellenflansch selbst ausgebildet sein kann oder aber in einer besonders vorteilhaften Ausführung von einer separaten, mit der Gelenkwelle 5 drehfest verbundenen Nabe gebildet wird. Derartige, zwischen einer Gelenkwelle 5 von einer Arbeitswalze 2 in Walzwerken 3 zum Einsatz gelangende Verbindungseinheiten werden auch als Treffer bezeichnet. Die Nabe bzw. der Treffer fungiert dabei als sogenannter Zapfenaufnehmer 7. Die Verbindung mit der Arbeitswalze 2 erfolgt dabei zwischen dem Zapfenaufnehmer 7 und einem Wellenzapfen 8 der Arbeitswalze 2. Die Welle-Nabe-Verbindung 6 ist dazu als formschlüssige Verbindung ausgeführt. In der Regel werden die Wellenzapfen 8 als sogenannte Flachzapfen ausgeführt. Ein Flachzapfen ist dabei durch zwei einander gegenüberliegende und parallel zueinander angeordnete Flachseiten 9 und 10 beschreibbar. Die Verbindung zwischen den einzelnen Flachseiten 9 und 10 am Wellenzapfen 8 ist durch einen Übergangsbereich charakterisiert, welcher durch einen Radius beschreibbar sein kann. Die Welle-Nabe-Verbindung 6 wird dabei durch das Einführen zumindest eines Teilbereiches des Flachzapfens in Längsrichtung der Arbeitswalze 2 betrachtet in eine dazu komplementäre Ausnehmung, insbesondere Öffnung 11 an den Zapfenaufnehmer 7 realisiert. Um ein problemloses Ein- bzw. Ausfahren des Flachzapfens zu gewährleisten, ist zwischen dem Flachzapfen und dem Zapfenaufnehmer 7 eine Spiel- oder Übergangspassung erforderlich. Zur Reduzierung des Spiels und zur Gewährleistung der spielfreien Drehmomentübertragung während des Betriebes ist eine Nachstelleinrichtung 15 vorgesehen. Diese umfasst zumindest ein Ausgleichselement, welches derart ausgeführt und angeordnet ist, den Flachzapfen gegen den Innenumfang 14 der Öffnung 11 des Zapfenaufnehmers 7 zu verspannen. Erfindungsgemäß erfolgt der Ausgleich des Spiels zwischen dem Flachzapfen und dem Zapfenaufnehmer 7 über zumindest ein, wenigstens eine Keilfläche aufweisendes Ausgleichselement 16.1. Die Keilfläche ist mit 17.1 bezeichnet und wirkt mit einer komplementär dazu ausgebildeten Keilfläche 18.1 am Innenumfang 14 der Öffnung 11 des Zapfenaufnehmers 7 zusammen. In besonders vorteilhafter Ausbildung umfasst die Nachstelleinrichtung 15 zumindest zwei Ausgleichselemente 16.1 und 16.2, die zumindest jeweils eine Keilfläche 17.1, 17.2 umfassen, die mit dazu komplementären Keilflächen 18.1, 18.2 am Innenumfang des Zapfenaufnehmers 7 in Wirkverbindung bringbar sind. Die Keilflächen 18.1 und 18.2 am Innenumfang 14 der Öffnung 11 am Zapfenaufnehmer 7 sind dabei hinsichtlich ihres Verlaufs derart ausgerichtet, dass diese durch eine Richtungskomponente quer oder in einem Winkel zur Rotationsachse R des Zapfenaufnehmers 7 verlaufend ausgerichtet sind. Die Rotationsachse R des Zapfenaufnehmers 7 entspricht der Mittenachse des Zapfenaufnehmers 7 und beschreibt dessen Längsrichtung.

Die Figur 2a verdeutlicht dabei in einem Axialschnitt eine Ausführung der Einzelkomponenten der Welle-Nabe-Verbindung 6. Dargestellt ist in Figur 2a in einem Axialschnitt der Zapfenaufnehmer 7 in einer beispielhaften Ausführung mit der Öffnung 11, die sich in Längsrichtung der Mittenachse, die mit der Rotationsachse R zusammenfällt. Ferner dargestellt ist ein Ausschnitt aus der Arbeitswalze 2, insbesondere der Wellenzapfen 8 in Form eines Flachzapfens. Der in der Figur 2b dargestellte Flachzapfen wird in die Öffnung 11 des Zapfenaufnehmers 7 in Pfeilrichtung eingeführt. Zur Verdeutlichung der Richtungen ist beispielhaft ein Koordinatensystem an den Flachzapfen der Arbeitswalze 2 angelegt. Das Koordinatensystem verdeutlicht in der X-Richtung die Längsrichtung, während die Y-Richtung der Querrichtung zu dieser entspricht und die Z-Richtung die Höhenrichtung beschreibt.

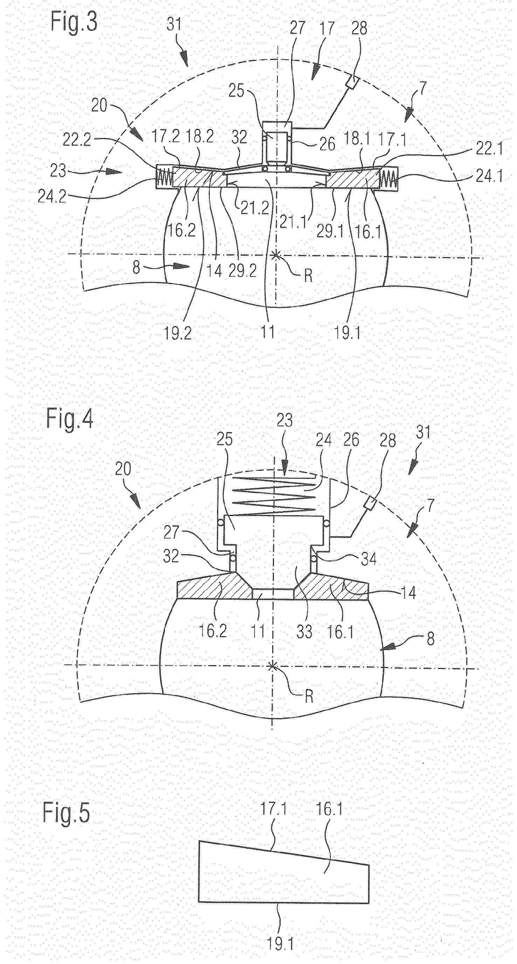

Die Figuren 3 und 4 zeigen in besonders vorteilhafter Ausführung anhand eines achssenkrechten Schnittes die Anordnung der Ausgleichselemente 16.1 und 16.2 zwischen dem Flachzapfen und dem Innenumfang 14 der Öffnung 11. Der Zapfenaufnehmer 7 ist dazu lediglich angedeutet und daher nur mittels unterbrochener Linie dargestellt. Dargestellt ist lediglich eine Nachstelleinrichtung 15 an einer Flachseite des Wellenzapfens 8. Es versteht sich, dass in besonders vorteilhafter Ausbildung zwischen beiden Flachseiten 9, 10 und dem Zapfenaufnehmer 7 jeweils eine Nachstelleinrichtung 15 vorgesehen ist.

Die Figur 3 verdeutlicht eine erste besonders vorteilhafte Ausgestaltung, bei welcher die Ausgleichselemente 16.1 und 16.2 derart ausgeführt sind, dass diese durch eine ebene Fläche 19.1 bzw. 19.2 charakterisiert sind, die an einem der miteinander zu verbindenden Komponenten- Wellenzapfen 8 oder Zapfenaufnehmer 7 - an einer dazu komplementären Fläche 29.1, 29.2 zum Anliegen gelangt. Ferner ist das einzelne Ausgleichselement 16.1 bzw. 16.2 durch eine der ebenen Fläche gegenüberliegende Keilfläche 17.1 bzw. 17.2 charakterisiert, die mit einer dazu komplementären Keilfläche 18.1, 18.2 an dem jeweils mit dem Ausgleichselement 16.1, 16.2 in Wirkverbindung bringbaren Bauteil - dem Zapfenaufnehmer 7 oder dem Wellenzapfen 8 - zum Anliegen gelangt. Dabei ist der Verlauf und die Ausrichtung der Keilfläche 17.1, 17.2 am Ausgleichselement 16.1, 16.2 in Einbaulage und der dazu komplementären Keilfläche 18.1, 18.2 am Zapfenaufnehmer 7 und/oder dem Flachzapfen 8 durch eine Richtungskomponente charakterisiert, die in einem Winkel zu einer Ebene, beschreibbar durch die Rotationsachse R und einer Senkrechten dazu, verläuft.

In besonders vorteilhafter Ausbildung sind die einzelnen Keilflächen quer zur Rotationsachse R ausgerichtet. Die Ausgleichselemente 16.1 und 16.2 sind derart angeordnet, dass die Keilflächen 17.1 und 17.2 der beiden Ausgleichselemente 16.1 und 16.2 einander entgegengesetzt ausgerichtet sind, um ein sicheres Verklemmen des Flachzapfens mit dem Zapfenaufnehmer 7 zu gewährleisten. Im einfachsten Fall werden dazu die einzelnen Ausgleichselemente 16.1, 16.2 über Stelleinrichtungen 20 mit einer Stellkraft beaufschlagt. Die Stellkraft wird hier senkrecht zu einer Ebene, die durch die Rotationsachse R und einer Senkrechten zu dieser beschreibbar ist, vorzugsweise in Querrichtung zur Längsachse des Zapfenaufnehmers aufgebracht und ist vorzugsweise einstellbar.

Die Stellkraft wird über eine Spanneinrichtung 23 erzeugt, umfassend im dargestellten Fall beispielhaft zwei Spannelemente 24.1, 24.2, die zwischen dem einzelnen Ausgleichselement 16.1, 16.2 und Zapfenaufnehmer 7 angeordnet sind und eine Stellkraft auf das jeweilige Ausgleichselement 16.1, 16.2 aufbringen, welche größer als die erforderliche Haltekraft ist, um das Ausgleichselement 16.1, 16.2 in seiner Lage gegenüber der Anschlusskomponente - Zapfenaufnehmer 7 und Wellenzapfen 8 - zu halten.

Die einzelnen Ausgleichselemente 16.1 und 16.2 sind hier gegenüber dem Innenumfang 14 des Zapfenaufnehmers 7 über jeweils eine Federeinheit 24.1 und 24.2 vorgespannt. Die Federeinheiten 24.1, 24.2 sind Bestandteil der Spanneinrichtung 23. Die Größe der Federkräfte der Federeinheiten 24.1, 24.2 bestimmt dabei die Klemmkraft. Diese Kraft kann einstellbar sein oder aber konstruktiv vorgegeben. Im dargestellten Fall wird mit der Spanneinrichtung 23 jeweils eine Kraft an den voneinander wegweisenden Stirnseiten 22.1 und 22.2 der einzelnen Ausgleichselemente 16.1, 16.2 aufgebracht, die ein Verspannen der Keilflächen 17.1, 17.2 mit den jeweils dazu komplementären Keilflächen 18.1, 18.2 am Innenumfang 14 der Öffnung 11 am Zapfenaufnehmer 7 bewirkt.

Um ein schnelles und sicheres Lösen der beiden Ausgleichselemente 16.1, 16.2 zu ermöglichen, ist eine Löseeinrichtung 31 vorgesehen, die eine Kraft F mit einer Richtungskomponente entgegen der Stellkraft der Stelleinrichtung 20 bewirkt. Spanneinrichtung 23 und Löseeinrichtung 31 werden von unterschiedlichen Funktionseinheiten gebildet. Die Einrichtung 31 umfasst eine Federeinheit 32, welche beispielhaft als Tellerfeder ausgebildet ist, die auf die beiden Ausgleichselemente 16.1, 16.2 im Sinne einer Abstandseinstellung wirkt. Andere Spreizelemente, die an den zueinander weisenden Stirnseiten 21.1, 21.2 der Ausgleichselemente 16.1, 16.2 wirksam werden, sind ebenfalls denkbar, wobei die Einrichtung 31, welche an den zueinander weisenden Stirnseiten 21.1 und 21.2 der Ausgleichselemente 16.1, 16.2 wirksam wird, eine Stellkraft entgegen die Federeinheiten 24.1 und 24.2 erzeugt. Dazu umfasst diese ein Kolbenelement 25, welches in einer Führung 26 im Zapfenaufnehmer 7 geführt ist, wobei die Führung druck- und mediendicht erfolgt. Die Führung des Kolbens 25 ist dabei im Zapfenaufnehmer 8 in Wirkrichtung der Stellkraft verlaufend, angeordnet und ausgebildet. Die Beaufschlagung mit Druckmittel erfolgt beispielsweise mittels einer Druckkammer 27, wobei die Druckkammer 27 zwischen den Innenumfang 14 des Zapfenaufnehmers 7 und Kolbenelement 25 gebildet wird. Zur Versorgung der Druckkammer 27 mit Druckmedium weist der Zapfenaufnehmer 7 zumindest einen Anschluss 28 auf, der sich bis in den Bereich des Außenumfanges des Zapfenaufnehmers 7 erstreckt, wobei über diesen eine Versorgung mit Betriebsmittel erfolgen kann.

Das Kolbenelement 25 wirkt an seiner von der Druckkammer 27 weggerichteten Kolbenfläche mit der Federeinheit 32 zusammen und bewirkt beim Aufbringen einer Kraft senkrecht zur Rotationsachse R ein Verschieben der Ausgleichselemente 16.1, 16.2 aus ihrer, eine Wirkverbindung mit den Innenumfangsflächen des Zapfenaufnehmers 7 einnehmenden Lage. In Abhängigkeit der Größe der über die Federeinheiten 24.1, 24.2 aufgebrachten Vorspannkraft kann bei Verschleiß automatisch eine Nachstellung der Ausgleichselemente 16.1, 16.2 durch Verschieben in Richtung der Keilflächen 18.1, 18.2 am Zapfenaufnehmer 7 erfolgen.

Die Einrichtung 31 ist hier als hydraulische Stelleinrichtung ausgebildet.

Die Hydraulik wird dabei lediglich beim Walzenwechsel zum Lösen verwendet, um die Ausgleichselemente 16.1, 16.2 aus ihrer über die Federeinheit 24.1 und 24.2 vorgespannten Stellung herauszubewegen.

Die Figur 4 zeigt eine Weiterbildung, bei welcher die Funktionen der Spanneinrichtung 23 und der Einrichtung 31 zum Lösen in einer einzigen Einrichtung, hier der Stelleinrichtung 20 vereint sind. Die Ausgleichselemente 16.1 und 16.2 sind in Analogie zu den Ausführungen in Figur 4 angeordnet. Diesbezüglich kann auf diese verwiesen werden. Die Spanneinrichtung 23 und die Einrichtung 31 zum Lösen sind bauteilmäßig zusammengefasst. Die Stelleinrichtung 20 ist als mechanischhydraulische Stelleinrichtung ausgeführt. Die Stelleinrichtung 20 umfasst auch hier in Analogie zur Ausführung in Figur 4 ein Kolbenelement 25, welches in einer Führung 26 im Zapfenaufnehmer 7 geführt ist und mit seiner zu den Ausgleichselementen 16.1, 16.2 ausgerichteten Kolbenseite 33 auf diese direkt einwirken kann. Dazu wird eine an der Kolbenseite 33 komplementär zu einer Fläche am Ausgleichselement 16.1, 16.2 ausgebildete Fläche vorgesehen. Die Verspannung der Ausgleichselemente 16.1, 16.2 mit dem Zapfenaufnehmer 7 und dem Wellenzapfen 8 erfolgt durch Aufbringen einer Stellkraft über den entsprechenden Flächenbereich an der Kolbenseite 33. Die Kraft kann über eine Vorspanneinrichtung, hier beispielhaft eine Federeinheit 24 in Analogie zu Figur 3 erzeugt werden, wobei die über die Federeinheit 24 aufgebrachte Kraft über das Kolbenelement 25 auf die Ausgleichselemente 16.1, 16.2 wirkt. Zum Lösen wird das Kolbenelement 25 entgegen der Wirkungsrichtung der Federeinheit 24 beaufschlagt. Das Lösen erfolgt hydraulisch, wobei auch hier ein Anschluss 28 im Bereich des Außenumfanges des Zapfenaufnehmers 7 vorgesehen ist. Das Kolbenelement 25 ist als Stufenkolben ausgeführt, umfassend eine entgegengesetzt zur Wirkungsrichtung der Spanneinrichtung 23 ausgerichtete Fläche 34, die im Falle des gewünschten Lösens der Verbindung mit Druckmittel beaufschlagbar ist.

Die Stelleinrichtung 20, insbesondere die einzelnen Bestandteile Spanneinrichtung 23 und Einrichtung 31 zum Lösen sind vorzugsweise immer im Zapfenaufnehmer 7 integriert. Sie stellt eine einfache Möglichkeit dar, da Wellenzapfen 8 in der Regel normiert sind und daher derartige Ausführungen nicht an der Wellenzapfenoberfläche vorgesehen werden. Hier wird vorzugsweise immer eine ebene Fläche der Flachseiten der Wellenzapfen 8 zur Führung der Ausgleichselemente 16 genutzt.

Die Figuren 3 bis 4 stellen mögliche Ausführungsbeispiele dar. Die erfindungsgemäße Lösung ist jedoch nicht auf diese beschränkt. Entscheidend ist, dass die Ausgleichselemente über eine Stelleinrichtung in ihrer eine Klemmverbindung zwischen den Ausgleichselementen 16.1, 16.2 und den jeweiligen Anschlusselementen Wellenzapfen 8 und Zapfenaufnehmer 7 gewährleisten.

Alle in den Figuren 3 bis 4 dargestellten Ausführungen zeigen Ausgleichselemente 16.1, 16.2 mit einer Keilfläche 17.1, 17.2. Denkbar ist auch die in Figur 5 dargestellte Ausführung mit jeweils zwei einander gegenüberliegend angeordneten Keilflächen 17.1 und 19.1, die mit komplementär ausgebildeten Flächenbereichen am Zapfenaufnehmer 7 und dem Wellenzapfen 8 zusammenwirken.

Vorzugsweise sind die Ausgleichselemente 16.1, 16.2 aus einem Material, welches durch eine geringere Härte als die jeweiligen Anschlusselemente - Wellenzapfen 8 und Zapfenaufnehmer 7 - charakterisiert ist. Dadurch wird der Verschleiß in die einfach zu tauschenden Ausgleichselemente 16.1, 16.2 verlegt. Bei Verschleiß an den Ausgleichselementen 16.1, 16.2 würde sich daher ein Spiel in der Verbindung zwischen Wellenzapfen 8 und Zapfenaufnehmer 7 einstellen. Dies kann nun über die Stelleinrichtung 20 automatisch wieder ausgeglichen werden, indem die Ausgleichselemente 16.1, 16.2 durch eine Kraft mit einer Richtungskomponente in Querrichtung beaufschlagt werden.

### Bezugszeichenliste

- 1: Antriebsstrang
- 2: Walze, Arbeitswalze, Welle
- 3: Walzwerk
- 4: Antriebsmaschine
- 5: Gelenkwelle
- 6: Welle-Nabe-Verbindung, insbesondere Wellenzapfen-Trefferverbindung
- 7: Zapfenaufnehmer
- 8: Wellenzapfen
- 9: Flachseite
- 10: Flachseite
- 11: Öffnung
- 14: Innenumfang der Öffnung
- 15: Nachstelleinrichtung
- 16.1, 16.2: Ausgleichselement
- 17.1, 17.2: Keilfläche des Ausgleichselementes
- 18.1, 18.2: Keilfläche
- 19.1: Fläche
- 20: Stelleinrichtung
- 21.1, 21.2: Stirnseite
- 22.1, 22.2: Stirnseite
- 23: Spanneinrichtung
- 23.1, 23.2: Spannelemente
- 24: Federelement
- 24.1, 24.2: Federelemente
- 25: Kolbenelement
- 26: Führung
- 27: Druckkammer
- 28: Anschluss
- 29.1, 29.2: Flächen
- 30: Federeinheit
- 31: Löseeinrichtung
- 32: Federeinheit
- 33: Kolbenseite
- 34: Kolbenfläche
- R: Rotationsachse

## Patentansprüche

1. Spielfreie Welle-Nabe-Verbindung, insbesondere Wellenzapfen-Trefferverbindung für den Einsatz in Walzwerken, wobei zumindest ein Teilbereich einer um eine in Längsrichtung verlaufende Rotationsachse (R) rotierbaren Welle (2) mit einem Zapfenaufnehmer (7) unter Ausbildung eines Verbindungsbereiches formschlüssig ineinandergreifend zueinander angeordnet sind und zwischen der Welle (2) und dem Zapfenaufnehmer (7) zumindest eine Nachstelleinrichtung (15) zum Ausgleich von Spiel vorgesehen ist, wobei die Nachstelleinrichtung (15) als Klemmvorrichtung zwischen der Welle und dem Zapfenaufnehmer (7) ausgeführt ist, wobei eine automatische Nachstellung eines Ausgleichselementes (16.1, 16.2) der Nachstelleinrichtung (15) mit mindestens einer mit einer der Anschlusskomponenten - Zapfenaufnehmer (7) und/oder Welle (2) - zusammenwirkenden Keilfläche (17.1, 17.2, 18.1, 18.2) vorgesehen ist, **dadurch gekennzeichnet, dass**
die Keilfläche (17.1, 17.2, 18.1, 18.2) senkrecht zur Längsrichtung des Zapfenaufnehmers (7) verlaufend ausgerichtet ist, wobei die einzelne Nachstelleinrichtung (15) zumindest zwei Ausgleichselemente (16.1, 16.2) umfasst und die Ausgleichselemente beidseits einer Ebene, wobei die Ebene durch die Längsachse des Zapfenaufnehmers (7) und einer Senkrechten zu dieser beschreibbar ist, zwischen Zapfenaufnehmer (7) und Welle (2) angeordnet sind und wobei die Ausführung der Keilflächen zumindest an einer mit einer Anschlusskomponente zusammenwirkenden Seite der Ausgleichselemente erfolgt.

2. Spielfreie Welle-Nabe-Verbindung nach Anspruch 1,
**dadurch gekennzeichnet, dass**
für die automatische Nachstellung mindestens eine Spanneinrichtung (23) vorgesehen ist, wobei durch die Spanneinrichtung (23) das mindestens eine Ausgleichselement (16.1, 16.2) in Richtung einer Klemmstellung kraftbeaufschlagt wird.

3. Spielfreie Welle-Nabe-Verbindung nach einem der vorhergehenden Ansprüche,
**dadurch gekennzeichnet, dass**
die Welle (2) im Verbindungsbereich mit dem Zapfenaufnehmer (7) als Flachzapfen ausgeführt ist, umfassend zwei parallel zueinander angeordnete Flachseiten (9, 10) und zwischen jeder Flachseite und dem Zapfenaufnehmer eine Nachstelleinrichtung (15) vorgesehen ist, wobei die mit den Anschlusskomponenten zusammenwirkenden Keilflächen der einer Flachseite (9) zugeordneten Ausgleichselemente (16.1, 16.2) einer Nachstelleinrichtung (15) einander entgegengesetzt ausgerichtet sind.

4. Spielfreie Welle-Nabe-Verbindung nach einem der Ansprüche 1 bis 2, **dadurch gekennzeichnet, dass**
die mit der Welle (2), insbesondere dem Wellenzapfen (8) zusammenwirkende Fläche des Ausgleichselementes (16.1, 16.2) als Keilfläche (19.1) ausgebildet ist, die mit einer dazu komplementär ausgeführten Keilfläche am Wellenzapfen (8) zusammenwirkt.

5. Spielfreie Welle-Nabe-Verbindung nach einem der Ansprüche 1 bis 4, **dadurch gekennzeichnet, dass**
das einzelne Ausgleichselement (16.1, 16.2) mit einer Vorspannung gegenüber zumindest einem der Anschlusselemente - Zapfenaufnehmer (7) und/oder Welle (2) - und/oder gegenüber einem weiteren Ausgleichselement eingebaut ist.

6. Spielfreie Welle-Nabe-Verbindung nach einem der vorhergehenden Ansprüche **dadurch gekennzeichnet, dass**
das die Spanneinrichtung (23) ein Spannelement (24) umfasst, dass gleichzeitig die mindestens zwei Ausgleichselemente (16.1, 16.2) für eine automatische Nachstellung mit einer Kraft beaufschlagt.

7. Spielfreie Welle-Nabe-Verbindung nach einem der vorhergehenden Ansprüche 2 bis 6, **dadurch gekennzeichnet, dass**
die Spanneinrichtung (23) zumindest ein, einem Ausgleichselement zugeordnetes Spannelement (24.1, 24.2) umfasst, welches im Zapfenaufnehmer (7) sich an diesem abstützend geführt oder gelagert ist und an einem Flächenbereich des Ausgleichselementes angreift.

8. Spielfreie Welle-Nabe-Verbindung nach einem der Ansprüche 2 bis 7, **dadurch gekennzeichnet, dass**
die Stelleinrichtung (20) eine Löseeinrichtung (31) für die Klemmverbindung zwischen Ausgleichselement (16.1, 16.2) und Anschlusskomponente (2, 7) umfasst, die geeignet ist, wenigstens mittelbar am einzelnen Ausgleichselement (16.1, 16.2) eine entgegen der Stellkraft der Spanneinrichtung (23) wirksame Kraft aufzubringen.

9. Spielfreie Welle-Nabe-Verbindung nach Anspruch 8, **dadurch gekennzeichnet, dass**
die mit Vorspannung auf das einzelne Ausgleichselement (16.1, 16.2) entgegen zur Stellkraft der Spanneinrichtung (23) wirkende Einrichtung zumindest eine zwischen zwei in Querrichtung zu einer Ebene, gebildet von der Rotationsachse (R) des Zapfenaufnehmers und einer Senkrechten, angeordneten Ausgleichselementen (16.1, 16.2) angeordnete Federeinheit (30) umfasst.

10. Spielfreie Welle-Nabe-Verbindung nach Anspruch 8, **dadurch gekennzeichnet, dass**
die Löseeinrichtung (31) eine am Ausgleichselement (16.1, 16.2) oder einem mit diesem zusammenwirkenden Kolben einer Spanneinrichtung (23) wirksame hydraulische Stelleinrichtung (27, 28) umfasst.

11. Spielfreie Welle-Nabe-Verbindung nach einem der Ansprüche 1 bis 10, **dadurch gekennzeichnet, dass**
das einzelne Ausgleichselement (16.1, 16.2) als Verschleißplatte ausgebildet ist, welches eine geringere Härte als die Anschlusskomponenten - Zapfenaufnehmer (7) und Walze (2) - aufweist.

12. Zapfenaufnehmer (7), insbesondere Treffer, für eine spielfreie Welle-Nabe-Verbindung für den Einsatz in Walzwerken mit einer in Längsrichtung verlaufenden Öffnung (11) zur Aufnahme eines Wellenzapfens (8) einer um eine Rotationsachse (R) rotierbaren Welle (2),
**dadurch gekennzeichnet, dass**
der Zapfenaufnehmer (7) eine Nachstelleinrichtung (15) umfassend mindestens zwei Ausgleichselemente (16.1, 16.2) und eine Spanneinrichtung (23) für eine automatische Nachstellung der Nachstelleinrichtung (15) umfasst und an der durch die Öffnung (11) beschreibbaren Umfangsfläche des Zapfenaufnehmers (7) hier zumindest zwei keilförmig ausgebildete Flächen (18.1, 18.2) zum Zusammenwirken mit jeweils einem Ausgleichselement der Nachstelleinrichtung (15) vorgesehen sind, wobei die Flächen für das Zusammenwirken mit den Ausgleichselementen beidseits einer Ebene, wobei die Ebene durch die Längsachse des Zapfenaufnehmers (7) und einer Senkrechten zu dieser beschreibbar ist, im Zapfenaufnehmer ausgebildet sind und die Keilflächen (17.1, 17.2) der Ausgleichselemente (16.1, 16.2) senkrecht zur Längsrichtung des Zapfenaufnehmers (7) verlaufend ausgerichtet sind.

13. Antriebsanordnung für ein Walzwerk zum Antrieb zumindest einer Arbeitswalze (2), welche über eine Gelenkwelle (5) mit einer Antriebsmaschine (4) gekoppelt ist, wobei zwischen Gelenkwelle (5) und Arbeitswalze (2) eine Verbindungseinrichtung (6) in Form eines Treffers vorgesehen ist und die Verbindung zwischen dem Treffer und der Arbeitswalze (2) als spielfreie Welle-Nabe-Verbindung gemäß einem der Ansprüche 1 bis 11 ausgeführt ist.

## Claims

1. Play-free shaft/hub connection, in particular shaft journal/coupling sleeve connection for use in rolling mills, wherein at least one subregion of a shaft (2) that is rotatable about an axis of rotation (R) extending in the longitudinal direction and a journal holder (7) are arranged in a manner engaging one in the other in a form-fitting manner, forming a connecting region, and at least one adjusting device (15) for compensating for play is provided between the shaft (2) and the journal holder (7), wherein the adjusting device (15) is configured as a clamping mechanism between the shaft and the journal holder (7), wherein automatic adjustment of a compensating element (16.1, 16.2) of the adjusting device (15) by way of at least one wedge surface (17.1, 17.2, 18.1, 18.2) cooperating with one of the connection components - journal holder (7) and/or shaft (2) - is provided,
**characterized in that**
the wedge surface (17.1, 17.2, 18.1, 18.2) is oriented in a manner extending perpendicularly to the longitudinal direction of the journal holder (7), wherein the individual adjusting device (15) comprises at least two compensating elements (16.1, 16.2) and the compensating elements are arranged on both sides of a plane, wherein the plane is describable by the longitudinal axis of the journal holder (7) and a perpendicular thereto, between the journal holder (7) and shaft (2), and wherein the configuration of the wedge surfaces takes place at least on a side of the compensating elements that cooperates with a connection component.

2. Play-free shaft/hub connection according to Claim 1,
**characterized in that**
at least one tensioning device (23) is provided for automatic adjustment, wherein the at least one compensating element (16.1, 16.2) is forced in the direction of a clamping position by the tensioning device (23).

3. Play-free shaft/hub connection according to either of the preceding claims,
**characterized in that**
the shaft (2) is configured as a flat journal in the connecting region with the journal holder (7), comprising two flat sides (9, 10) that are arranged parallel to one another and, between each flat side and the journal holder, an adjusting device (15) is provided, wherein the wedge surfaces, cooperating with the connection components, of the compensating elements (16.1, 16.2), associated with a flat side (9), of an adjusting device (15) are oriented in opposite directions to one another.

4. Play-free shaft/hub connection according to either of Claims 1 and 2,
**characterized in that**
the surface of the compensating element (16.1, 16.2) that cooperates with the shaft (2), in particular the shaft journal (8), is in the form of a wedge surface (19.1), which cooperates with a wedge surface, configured in a complementary manner thereto, on the shaft journal (8).

5. Play-free shaft/hub connection according to one of Claims 1 to 4,
**characterized in that**
the individual compensating element (16.1, 16.2) is installed under pretension with respect to at least one of the connection elements - journal holder (7) and/or shaft (2) - and/or with respect to a further compensating element.

6. Play-free shaft/hub connection according to one of the preceding claims,
**characterized in that**
the tensioning device (23) comprises a tensioning element (24) that simultaneously applies a force to the at least two compensating elements (16.1, 16.2) for automatic adjustment.

7. Play-free shaft/hub connection according to one of the preceding Claims 2 to 6,
**characterized in that**
the tensioning device (23) comprises at least one tensioning element (24.1, 24.2) assigned to a compensating element, said tensioning element (24.1, 24.2) being mounted or guided in the journal holder (7) in a manner supported thereon and acting on a surface region of the compensating element.

8. Play-free shaft/hub connection according to one of Claims 2 to 7,
**characterized in that**
the actuating device (20) comprises a releasing device (31) for the clamping connection between the compensating element (16.1, 16.2) and connection component (2, 7), said releasing device (31) being suitable for applying a force that acts counter to the actuating force of the tensioning device (23) at least indirectly to the individual compensating element (16.1, 16.2).

9. Play-free shaft/hub connection according to Claim 8,
**characterized in that**
the device that acts with pretension on the individual compensating element (16.1, 16.2) counter to the actuating force of the tensioning device (23) comprises at least one spring unit (30) arranged between two compensating elements (16.1, 16.2) arranged in a transverse direction to a plane formed by the axis of rotation (R) of the journal holder and a perpendicular.

10. Play-free shaft/hub connection according to Claim 8,
**characterized in that**
the releasing device (31) comprises a hydraulic actuating device (27, 28) that acts on the compensating element (16.1, 16.2) or a piston, cooperating therewith, of a tensioning device (23).

11. Play-free shaft/hub connection according to one of Claims 1 to 10,
**characterized in that**
the individual compensating element (16.1, 16.2) is in the form of a wear plate, which has a lower hardness than the connection components - journal holder (7) and roll (2).

12. Journal holder (7), in particular coupling sleeve, for a play-free shaft/hub connection for use in rolling mills, having an opening (11), extending in a longitudinal direction, for receiving a shaft journal (8) of a shaft (2) that is rotatable about an axis of rotation (R),
**characterized in that**
the journal holder (7) comprises an adjusting device (15) comprising at least two compensating elements (16.1, 16.2) and a tensioning device (23) for automatic adjustment of the adjusting device (15), and at the circumferential surface, describable by the opening (11), of the journal holder (7) at least two surfaces (18.1, 18.2), formed in a wedge-shaped manner, for cooperating with in each case one compensating element of the adjusting device (15) are provided here, wherein the surfaces for cooperating with the compensating elements are formed on both sides of a plane, wherein the plane is describable by the longitudinal axis of the journal holder (7) and a perpendicular thereto, in the journal holder and the wedge surfaces (17.1, 17.2) of the compensating elements (16.1, 16.2) are oriented in a manner extending perpendicularly to the longitudinal direction of the journal holder (7).

13. Drive arrangement for a rolling mill for driving at least one working roll (2), which is coupled to a drive machine (4) via an articulated shaft (5), wherein a connecting device (6) in the form of a coupling sleeve is provided between the articulated shaft (5) and working roll (2) and the connection between the coupling sleeve and the working roll (2) is configured as a play-free shaft/hub connection according to one of Claims 1 to 11.

## Revendications

1. Liaison arbre-moyeu sans jeu, en particulier liaison entre un tourillon d'arbre et un moyeu de liaison, pour l'utilisation dans des laminoirs, au moins une région partielle d'un arbre (2) pouvant tourner autour d'un axe de rotation (R) s'étendant dans la direction longitudinale étant disposée avec un logement de tourillon (7) en formant une région de liaison de manière à s'engager l'un dans l'autre par engagement par correspondance de formes, et entre l'arbre (2) et le logement de tourillon (7) étant prévu au moins un dispositif de réglage (15) pour compenser le jeu, le dispositif de réglage (15) étant réalisé sous forme de dispositif de serrage entre l'arbre et le logement de tourillon (7), un réglage automatique d'un élément de compensation (16.1, 16.2) du dispositif de réglage (15) étant prévu avec au moins une surface de clavette (17.1, 17.2, 18.1, 18.2) coopérant avec l'un des composants de raccordement, c'est-à-dire le logement de tourillon (7) et/ou l'arbre (2), **caractérisée en ce que**
la surface de clavette (17.1, 17.2, 18.1, 18.2) est orientée de manière à s'étendre perpendiculairement à la direction longitudinale du logement de tourillon (7), le dispositif de réglage individuel (15) comprenant au moins deux éléments de compensation (16.1, 16.2) et les éléments de compensation étant disposés entre le logement de tourillon (7) et l'arbre (2) de part et d'autre d'un plan, le plan pouvant être décrit par l'axe longitudinal du logement de tourillon (7) et une perpendiculaire à celui-ci, et la réalisation des surfaces de clavette s'effectuant au moins au niveau d'un côté des éléments de compensation coopérant avec un composant de raccordement.

2. Liaison arbre-moyeu sans jeu selon la revendication 1,
**caractérisée en ce que**
pour le réglage automatique, on prévoit au moins un dispositif de serrage (23), l'au moins un élément de compensation (16.1, 16.2) étant sollicité par force par le dispositif de serrage (23) dans la direction d'une position de serrage.

3. Liaison arbre-moyeu sans jeu selon l'une quelconque des revendications précédentes,
**caractérisée en ce que**
l'arbre (2) est réalisé dans la région de liaison avec le logement de tourillon (7) sous forme de tourillon plat, comprenant deux côtés plats (9, 10) disposés parallèlement l'un à l'autre, et entre chaque côté plat et le logement de tourillon étant prévu un dispositif de réglage (15), les surfaces de clavette, coopérant avec les composants de raccordement, des éléments de compensation (16.1, 16.2) d'un dispositif de réglage (15) associés à un côté plat (9) étant orientées à l'opposé l'une de l'autre.

4. Liaison arbre-moyeu sans jeu selon l'une quelconque des revendications 1 et 2,
**caractérisée en ce que**
la surface de l'élément de compensation (16.1, 16.2) coopérant avec l'arbre (2), en particulier avec le tourillon d'arbre (8), est réalisée sous forme de surface de clavette (19.1) qui coopère avec une surface de clavette réalisée de manière complémentaire à celle-ci au niveau du tourillon d'arbre (8).

5. Liaison arbre-moyeu sans jeu selon l'une quelconque des revendications 1 à 4,
**caractérisée en ce que**
l'élément de compensation individuel (16.1, 16.2) est incorporé avec précontrainte par rapport à au moins l'un des éléments de raccordement, c'est-à-dire le logement de tourillon (7) et/ou l'arbre (2), et/ou par rapport à un autre élément de compensation.

6. Liaison arbre-moyeu sans jeu selon l'une quelconque des revendications précédentes,
**caractérisée en ce que**
le dispositif de serrage (23) comprend un élément de serrage (24) qui sollicite avec une force simultanément les au moins deux éléments de compensation (16.1, 16.2) en vue d'un réglage automatique.

7. Liaison arbre-moyeu sans jeu selon l'une quelconque des revendications précédentes 2 à 6,
**caractérisée en ce que**
le dispositif de serrage (23) comprend au moins un élément de serrage (24.1, 24.2) associé à un élément de compensation, qui est guidé ou supporté dans le logement de tourillon (7) en s'appuyant sur celui-ci et qui vient en prise au niveau d'une région de surface de l'élément de compensation.

8. Liaison arbre-moyeu sans jeu selon l'une quelconque des revendications 2 à 7,
**caractérisée en ce que**
le dispositif de commande (20) comprend un dispositif de desserrage (31) pour la liaison par serrage entre l'élément de compensation (16.1, 16.2) et le composant de raccordement (2, 7), lequel est approprié pour appliquer, au moins indirectement, sur l'élément de compensation individuel (16.1, 16.2), une force agissant à l'encontre de la force de réglage du dispositif de serrage (23).

9. Liaison arbre-moyeu sans jeu selon la revendication 8,
**caractérisée en ce que**
le dispositif agissant avec précontrainte sur l'élément de compensation individuel (16.1, 16.2) à l'encontre de la force de réglage du dispositif de serrage (23) comprend au moins une unité de ressort (30) disposée entre deux éléments de compensation (16.1, 16.2) disposés dans la direction transversale par rapport à un plan formé par l'axe de rotation (R) du logement de tourillon et une perpendiculaire.

10. Liaison arbre-moyeu sans jeu selon la revendication 8,
**caractérisée en ce que**
le dispositif de desserrage (31) comprend un dispositif de commande hydraulique (27, 28) agissant sur l'élément de compensation (16.1, 16.2) ou sur un piston d'un dispositif de serrage (23) coopérant avec celui-ci.

11. Liaison arbre-moyeu sans jeu selon l'une quelconque des revendications 1 à 10,
**caractérisée en ce que**
l'élément de compensation individuel (16.1, 16.2) est réalisé sous forme de plaque d'usure qui présente une plus faible dureté que les composants de raccordement, c'est-à-dire le logement de tourillon (7) et le cylindre (2).

12. Logement de tourillon (7), en particulier moyeu de liaison, pour une liaison arbre-moyeu sans jeu, pour l'utilisation dans des laminoirs, comprenant une ouverture (11) s'étendant dans la direction longitudinale pour recevoir un tourillon d'arbre (8) d'un arbre (2) pouvant tourner autour d'un axe de rotation (R),
**caractérisé en ce que**
le logement de tourillon (7) comprend un dispositif de réglage (15) comprenant au moins deux éléments de compensation (16.1, 16.2) et un dispositif de serrage (23) pour un réglage automatique du dispositif de réglage (15) et, au niveau de la surface périphérique du logement de tourillon (7) pouvant être décrite par l'ouverture (11), au moins deux surfaces (18.1, 18.2) réalisées en forme de clavette étant ici prévues pour coopérer à chaque fois avec un élément de compensation du dispositif de réglage (15), les surfaces prévues pour coopérer avec les éléments de compensation étant réalisées dans le logement de tourillon de part et d'autre d'un plan, le plan pouvant être décrit par l'axe longitudinal du logement de tourillon (7) et une perpendiculaire à celui-ci, et les surfaces de clavette (17.1, 17.2) des éléments de compensation (16.1, 16.2) étant orientées de manière à s'étendre perpendiculairement à la direction longitudinale du logement de tourillon (7).

13. Agencement d'entraînement pour un laminoir pour l'entraînement d'au moins un cylindre de travail (2) qui est accouplé par le biais d'un arbre d'articulation (5) à une machine d'entraînement (4), un dispositif de liaison (6) sous la forme d'un moyeu de liaison étant prévu entre l'arbre d'articulation (5) et le cylindre de travail (2) et la liaison entre le moyeu de liaison et le cylindre de travail (2) étant réalisée sous forme de liaison arbre-moyeu sans jeu selon l'une quelconque des revendications 1 à 11.
